# EUROPÄISCHE PATENTANMELDUNG

(11) **EP 0 693 759 A1**
(43) Veröffentlichungstag der Anmeldung: **24.01.1996**
(21) Anmeldenummer: 95810468.9
(22) Anmeldetag: 17.07.1995
(51) Int. Cl.: H01G 5/06, H01G 5/01

(54) **Variabler Drehkondensator**

(30) Priorität: 21.07.1994 CH 2310/94
(71) Anmelder: Comet Technik AG, CH-3097 Liebefeld (CH)
(72) Erfinder: Von Planta, Andrea, CH-8955 Oetwil (CH); Zurbrügg, Peter, CH-3097 Liebefeld (CH)
(74) Vertreter: AMMANN PATENTANWAELTE AG BERN

(57) **Zusammenfassung**

Der Drehkondensator weist in einem abgedichteten Gehäuse (3) untergebrachte Kondensatorplatten (2, 7) auf. Er ist bevorzugt mit gasförmigem SF₆ als Dielektrikum unter einen Druck gefüllt, der höher als der Umgebungsdruck ist. Dank dem Dielektrikum und der robusten Bauweise kann der Plattenabstand und damit das Bauvolumen des Kondensators klein gehalten werden. Die verdrehbaren Kondensatorplatten (2) sind auf einer zweifach gelagerten Drehwelle (1) festgemacht. Für eine gleichmässig verteilte Erwärmung kann die Stromzufuhr von zwei Seiten her über Federkontakte (32), die in elektrischem Kontakt mit den Drehwellenenden (21, 22) stehen, erfolgen. Eine bevorzugte Anwendung finden die Drehkondensatoren in Beschichtungs- und Ätzanlagen der Halbleiterindustrie.

## Beschreibung

Die vorliegende Erfindung betrifft einen variablen Drehkondensator gemäss Oberbegriff des Anspruchs 1.

Drehkondensatoren dieser Art sind in den verschiedensten Ausführungen bekannt. Die festen wie auch die drehbaren Kondensatorplatten weisen dabei in der Regel je eine wirksame Fläche auf, welche etwa der Hälfte der gesamthaft zur Verfügung stehenden Fläche entspricht. Durch Verdrehen der Drehwelle kann somit eine Kondensatorwirkung zwischen Minimum und Maximum eingestellt werden. Bei den bekannten Kondensatoren wird das Dielektrikum durch Luft gebildet.

Die bekannten Drehkondensatoren weisen gewisse Mängel auf, nämlich wegen des gewählten Dielektrikums einen relativ grossen Plattenabstand und somit je nach Anforderung einen grossen Platzbedarf und eine rasche Erwärmung durch die Stromzufuhr und eine relativ hohe Empfindlichkeit auf Verschmutzung und/oder Feuchtigkeit.

Bekannt ist aus der Patentveröffentlichung BE-A-516 656 ein veränderlicher Kondensator, der eine SF₆-Füllung und ein abgedichtetes Gehäuse aufweist. Die Kondensatorplatten sind als ineinandergestellte Zylindermäntel ausgebildet, und die Kapazitätsveränderung erfolgt durch axiale Verschiebung des beweglichen Kondensatorplattensatzes gegen den stationären Plattensatz. Hierdurch ist es möglich, die Abdichtung des Kondensatorgehäuses durch Faltenbälge an den Verstellelementen zu gewährleisten, die von aussen zugänglich sind.

Nachteilig an dieser bekannten Konstruktion ist der hohe Aufwand während der Fertigung, insbesondere der zylindrischen Plattenpakete und der Faltenbälge, sowie eine ungleichmässige Erwärmung der Kondensatorplatten durch die notwendigerweise einseitige Kontaktierung.

Eine Aufgabe der vorliegenden Erfindung besteht darin, einen Drehkondensator anzugeben, der verbesserte Betriebseigenschaften aufweist.

Ein derartiger Kondensator ist im Anspruch 1 angegeben. Die weiteren Ansprüche geben bevorzugte Ausführungsformen und Anwendungen des erfindungsgemässen Kondensators an.

Eine bevorzugte Ausführung des erfindungsgemässen Drehkondensators zeichnet sich dadurch aus, dass in der nach aussen abgedichteten und gegebenenfalls abgeschirmten Gehäusekammer ein als Dielektrikum wirkendes Gas eingeschlossen ist und dass die im Gehäuse gelagerte Drehwelle zu beiden Seiten der darauf angeordneten Kondensatorplatten mit Einspeisemitteln für HF-Strom in leitendem Kontakt steht, um den Strom von zwei Seiten her über die Drehwelle zu den Kondensatorplatten zu führen.

Vorzugsweise wird als Dielektrikum SF₆-Gas (Schwefelhexafluorid) verwendet, welches eine besonders kompakte Bauweise ermöglicht.

Durch eine beidseitige Lagerung der Drehwelle mit an den Wellenverlängerungen beidseitig angreifenden Einspeisemitteln des HF-Stromes kann überraschenderweise eine gleichmässige Erwärmung gewährleistet werden.

Die Einspeisemittel für den Strom sind vorzugsweise durch Federkontakte mit Mehrfach-Kontaktstellen gebildet, welche in Ausnehmungen von aufsetzbaren metallischen Gehäuseendflanschen untergebracht sein können.

Die Erfindung wird nachstehend anhand durch Figuren dargestellter Ausführungsbeispiele näher erläutert.
- Figur 1: zeigt einen Schnitt durch eine erste Ausführungsform eines erfindungsgemässen Drehkondensators,
- Figur 2: zeigt einen Schnitt durch eine Weiterbildung des erfindungsgemässen Drehkondensators,
- Figur 3: zeigt einen Schnitt durch ein Federkontaktelement gemäss Schnittlinie III-III in Figur 2,
- Figur 4: zeigt eine Platte des beweglichen Plattenpaketes, und
- Figur 5: zeigt eine Platte des stationären Plattenpaketes.

Der variable Drehkondensator weist eine Drehwelle 1 auf, auf welcher eine Vielzahl von Kondensatorplatten fest angeordnet ist. In einem Gehäuse 3, bestehend aus einem zylindrischen Mantel 4 und Abschlusskörpern 5, 6, sind feste Gegenplatten 7 vorgesehen. Die Kondensatorplatten 2 und 7 sind bevorzugt halbkreisförmig oder schmetterlingsflügelartig (diametral gegenüberliegende Kreissektoren) ausgebildet, so dass bei Verdrehen der Drehwelle 1 die Ueberdeckung der wirksamen Kondensatorfläche variiert werden kann.

Im Innenraum des Kondensatorgehäuses 3 greifen die Kondensatorflächen abwechselnd ineinander. Dank des aus SF₆-Gas bestehenden Dielektrikums, welches sich im nach aussen völlig abgedichteten und abgeschirmten Innenraum befindet, können die Plattenabstände minimal gehalten werden. Beidseits der Kondensatorplatten 2 ist die Drehwelle 1 im Gehäuse 3 gelagert. An ausserhalb der Lager 8, 9 liegenden Abschnitten der Welle 1 liegen Federelemente 10, 11 an, welche dazu dienen, den HF-Strom von beiden Seiten her über die Welle 1 in die Kondensatorplatten 2, 7 einzuspeisen. Dank dieser doppelseitigen Stromeinspeisung erfolgt eine gleichmässige Erwärmung, was den neuen Drehkondensator besonders auszeichnet.

Die Federelemente 10, 11 sind in Ausnehmungen von metallischen Endflanschen 12, 13 untergebracht. Die Flansche 12, 13 können zudem einer robusten mechanischen Befestigung dienen.

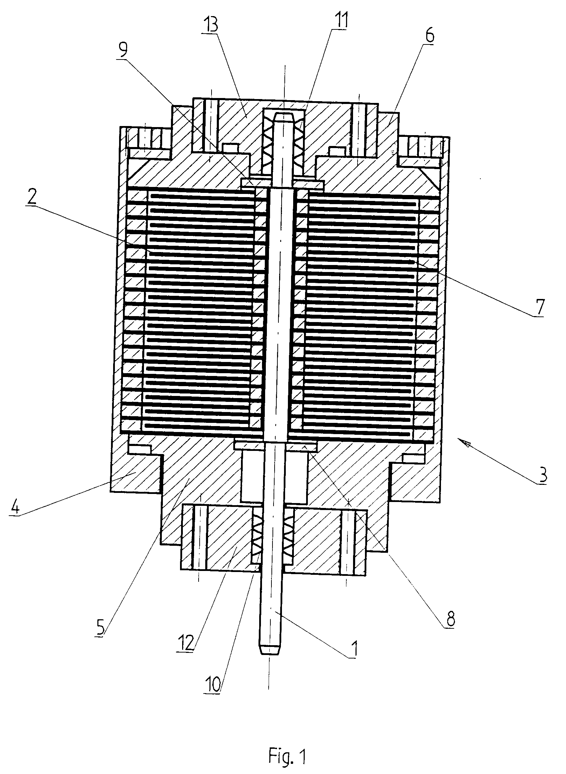

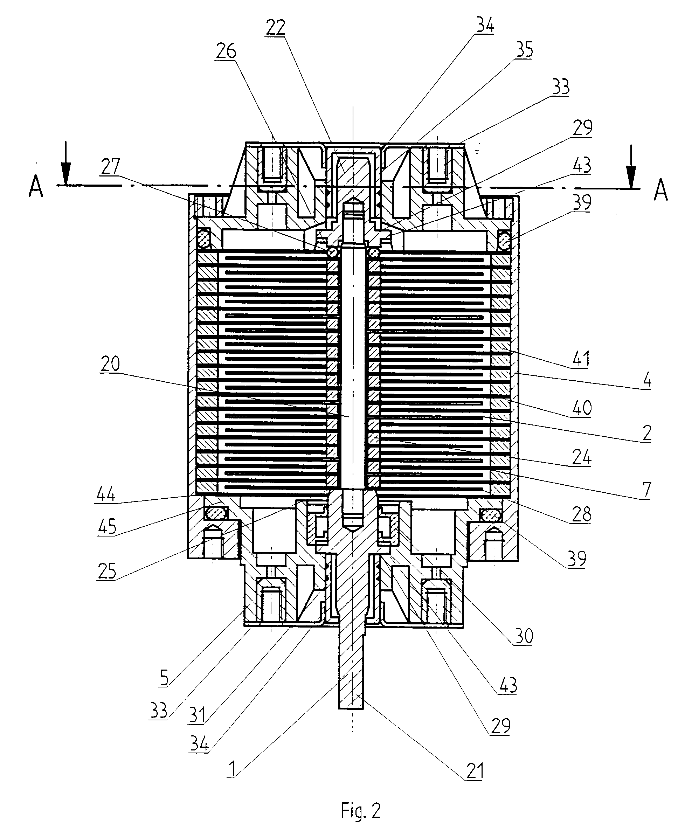

In der Weiterbildung des erfindungsgemässen veränderlichen Kondensators gemäss den Figuren 2 ff. sind übereinstimmende Elemente mit der Ausführung gemäss Figur 1 gleich bezeichnet, und eine Erläuterung dieser Komponenten erübrigt sich insoweit.

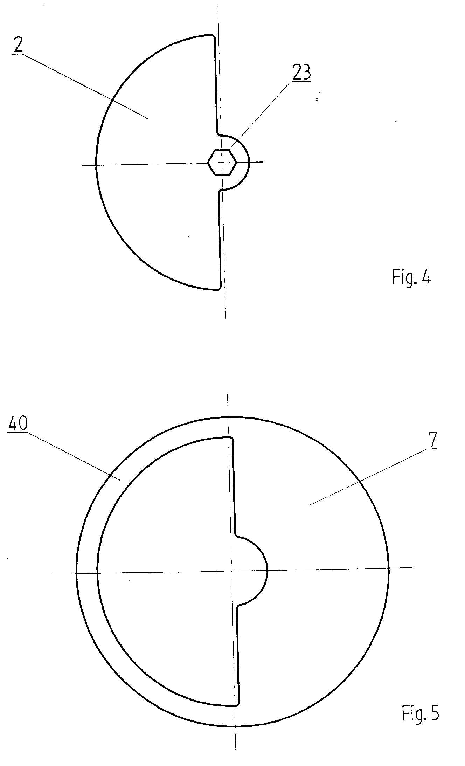

Die Welle 1 (Figur 2) besteht aus drei Teilen: dem Mittelstück 20, dem Antriebszapfen 21 und dem Endstück 22. Das Mittelstück 20 ist im Querschnitt sechseckig ausgebildet. Die Platten 2 des beweglichen Plattenpaketes (Figur 4) weisen eine entsprechende sechseckige Durchbrechung 23 mit dem Mass des Mittelstücks 20 auf. Die Platten 2 sind damit verdrehsicher auf das Mittelstück 20 aufgeschoben, wobei zwischen je zwei Platten 2 noch ein Distanzstück 24 angeordnet ist.

Das innere Ende 25 des Antriebszapfens 21 ist von deutlich grösserem Durchmesser als das Mittelstück 20 und bildet somit eine Stufe aus, die als Anschlag für die erste Platte 28 des beweglichen Plattenpaketes dient. Zwischen dem analog ausgebildeten inneren Ende 26 des Endstücks 22 und dem beweglichen Plattenpaket ist ein elastisches Element 27 angeordnet.

Antriebszapfen 21 und Endstück 22 weisen jeweils einen Kragen 43 auf, mit dem sie in einer Gleitlagerfläche 29 im jeweiligen Gehäuseabschlusskörper 5, 6 gleitend gelagert sind. Eine Wellendichtung 30 dichtet den Durchtritt des Antriebszapfens 21 ab. Die gängigen Wellendichtungen zum Abdichten von Wellendurchtritten haben sich, mit einer entsprechend präzisen Ausführung des Antriebszapfens 21, als hinreichend erwiesen, um über- die Lebensdauer des Kondensators hinweg bei mässigem Ueberdruck (2 - 5 Bar) des Schutzgases im Kondensator eine bestimmte Mindestfüllung aufrechtzuerhalten. Um einen doch auftretenden Verlust an Schutzgas auszugleichen, wird der Kondensator bei der Herstellung mit einem Ueberschuss an Schutzgas gefüllt, z. B. bei einem vorgegebenen Mindestdruck von 2 Bar mit einem Druck von 3 Bar.

In den Gehäuseabschluss 5 ist weiterhin eine metallische Büchse 31 mit eingesetzter Lamellenkontakthülse 32 eingepresst. Die Büchse 31 weist am Boden ein Loch auf, das als Durchtritt für den Antriebszapfen 21 dient. Auf der Oberfläche des Gehäuseabschlusses 5 ist eine Kontaktplatte 33, äquivalent dem metallischen Endflansch, mit einer Zentralbohrung angebracht, von der sich der Kragen 34 nach innen erstreckt. Der Kragen 34 umschliesst die Büchse 31 und stellt den elektrischen Kontakt zwischen Kontaktplatte 33 und beweglichem Plattenpaket über die Büchse 31, die Lamellenkontakthülse 32, den Antriebszapfen 21 und das Mittelstück 20 her.

Auf der Seite des Gehäuseabschlusses 6 befindet sich im wesentlichen die gleiche Konstruktion. Es entfällt jedoch die Durchtrittsöffnung im Boden der Buchse 35 und eine Wellendichtung.

Durch die beschriebenen Massnahmen ist eine weitgehend symmetrische, beidseitige Kontaktierung des beweglichen Plattenpaketes gewährleistet.

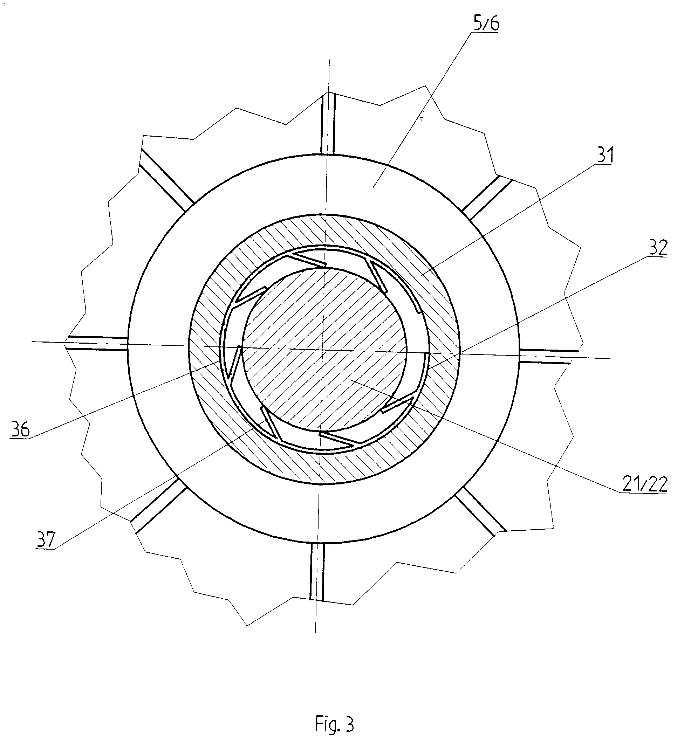

Figur 3 zeigt die Kontaktierung mittels der Lamellenhülse 32 in einer vergrösserten Darstellung. Der aufgeschnittene Mantel 36 der Hülse 32 liegt innen an der jeweiligen Büchse 31 bzw. 35 federnd an. Die aus dem Hülsenmantel 36 nach innen herausgedrückten Lamellen 37 liegen ihrerseits federnd am Antriebszapfen 21 bzw. dem Endstück 22 an.

Figur 5 zeigt noch eine Platte 7 des stationären Plattenpaketes, das im wesentlichen eine Scheibe ist, aus der eine Fläche äquivalent einer Platte 2 des beweglichen Plattenpaketes ausgenommen ist. Die Befestigung erfolgt mittels des durchgehenden Randes 40, dessen Aussendurchmesser gleich dem Innendurchmesser des Mantels 4 ist. Zwischen jeweils zwei Platten 7 ist ein Distanzring 41 eingefügt (Figur 2).

Zwischen den Gehäuseabschlüssen 5, 6 und dem Mantel 4 sind weitere Dichtelemente (O-Ringe) 39 vorhanden, um das Innere des Kondensators abzudichten. Die Gesamtkonstruktion wird durch Spannmittel (nicht dargestellt) zusammengehalten, die sich am einen Gehäuseabschluss 6 und dem Mantel 4 abstützen. Derartige Vorrichtungen sind dem Fachmann bekannt. Denkbar ist auch, den Gehäuseabschluss 6 in den Mantel 4 einzuschrauben.

Der Gehäuseabschluss 6 drückt direkt auf das stationäre Plattenpaket aus Platten 7 und Distanzringen 41, die am anderen Ende des Mantels 4 auf einer Stufe 44 des Mantels 4 und einen Flansch 45 des Gehäuseabschlusses 5 aufliegt. Der Gehäuseabschluss 5 wird damit seinerseits gegen das Ende des Mantels 4 gedrückt, wodurch in Verbindung mit dem Dichtelement 39 und den flanschartig ausgebildeten Anlageflächen von Abschluss 5 und Mantel 4 ein dichter Abschluss auf dieser Seite gewährleistet ist.

Durch geeignete Vorkehrungen sind die Platten 7 so ausgerichtet, dass die wirksamen Flächen hintereinander möglichst vollständig fluchtend angeordnet sind. Auch die Platten 2 des beweglichen Plattenpakets sind derart fluchtend angeordnet.

Aehnlich wird auch durch Druck der Gleitlagerfläche 29 im Gehäuseabschluss 6 Druck auf das Endstück 22 ausgeübt, wodurch die Teile der Welle 1 fest miteinander verbunden werden.

Die Bauteile der Plattenpakete sowie das Mittelstück 20 bestehen bevorzugt aus Aluminium bzw. einer Aluminiumlegierung

Die Gehäuseabschlüsse 5, 6 bestehen aus elektrisch isolierendem Material, bevorzugt aus Kunststoff, der weiter bevorzugt faserverstärkt ist.

Der vorstehend beschriebene Kondensator wird nach der Herstellung mit einem Schutzgas (SF₆) unter einem Druck von z. B. 3 Bar (20 °C) gefüllt. Das bevorzugte Anwendungsgebiet der erfindungsgemässen Kondensatoren ist durch folgende Daten charakterisierbar:
- Frequenz:: 1 - 100 MHz
- Strom:: 1 - 20 Ampere (Richtwert ca. 15 A)
- Spannungsfestigkeit:: > 1 kV (bevorzugt 1 - 8 kV)
- Kapazität:: ca. 60 - 1'500 pF.

Eine bevorzugte Anwendung der Kondensatoren ist als Abstimmelement in Schwingkreisen der HF-Technik, z. B. in Beschichtungs- und Ätzanlagen für die Halbleiterindustrie.

Die vorgenannte Beschreibung eines Ausführungsbeispiels der Erfindung erlaubt dem Fachmann eine grosse Anzahl von Variationen, ohne den Schutzbereich der Erfindung zu verlassen. Es ist denkbar, anstatt des Schutzgases SF₆ andere Schutzgase einzusetzen, z. B. Stickstoff. Auch die Ausbildung des Kondensators als Unterdruckkondensator bzw. Vakuumkondensator ist denkbar, sofern die Wellendichtung den umgekehrten Druckverhältnissen angepasst wird. Der Ueberdruck im Kondensator kann in weiten Grenzen gewählt werden. Als eine untere Grenze kann ein Druck angesehen werden, der bei allen Betriebsbedingungen zumindest einen mit dem Aussendruck übereinstimmenden oder höheren Druck im Kondensatorinneren gewährleisten. Dadurch wird jedenfalls ein Eindringen der Aussenatmosphäre in den Kondensator verhindert. Die Obergrenze für den Druck ist durch den Aufwand für die Konstruktion des Kondensatorgehäuses sowie durch die Neigung der Schutzgase, sich zu verflüssigen, beschränkt. Als problemlos kann ein Druckbereich von 1 - 5 Bar angesehen werden.

Anstatt der runden, zylindrischen Bauform des Kondensators sind auch andere, z. B. quaderförmige oder sechseckige Bauformen denkbar. Auch die Ausformung der Kondensatorplatten kann in weitem Umfang entsprechend einer Anpassung der Charakteristik des Kondensators frei gewählt werden.

## Patentansprüche

1. Variabler Drehkondensator mit einer Mehrzahl fest in einem Gehäuse angeordneten Kondensatorplatten (7) und einer weiteren Mehrzahl auf einer Drehwelle (1) angeordneten Kondensatorplatten (2), welche zwischen den erstgenannten Kondensatorplatten (7) und relativ zu diesen verdrehbar angeordnet sind, um durch Aenderung der Ueberdeckung die wirksame Kondensatorfläche zu variieren, gekennzeichnet durch die Anordnung der Kondensatorplatten (2, 7) in einer abgedichteten Gehäusekammer (4, 5, 6).

2. Drehkondensator gemäss Anspruch 1, dadurch gekennzeichnet, dass sich in der Gehäusekammer (4, 5, 6) ein als Dielektrikum wirkendes Schutzgas unter Gleich- oder Ueberdruck gegenüber dem Umgebungsdruck befindet.

3. Drehkondensator gemäss einem der Ansprüche 1 oder 2, dadurch gekennzeichnet, dass das Schutzgas SF₆ ist.

4. Drehkondensator gemäss einem der Ansprüche 1 bis 3, dadurch gekennzeichnet, dass die in der Gehäusekammer (4, 5, 6) gelagerte Drehwelle (1) zu beiden Seiten der darauf angeordneten Kondensatorplatten (2) mit Einspeisemitteln (32) für HF-Strom in leitendem Kontakt steht, um den Strom von zwei Seiten her über die Drehwelle zu den Kondensatorplatten zu führen.

5. Drehkondensator gemäss einem der Ansprüche 1 bis 4, dadurch gekennzeichnet, dass ein Wellenende als aus der Gehäusekammer (4, 5, 6) vorstehender Antriebszapfen (21) ausgebildet ist und der Durchtritt des Antriebszapfens (21) durch die Gehäusekammerwand (5) mit einer gasdichten Dichtung versehen ist.

6. Drehkondensator gemäss einem der Ansprüche 1 bis 5, dadurch gekennzeichnet, dass die Drehwelle (1) in zwei beidseitig der Kondensatorplatten (2) angeordneten Endlagern (29) gelagert ist, die Endlager in der Gehäusekammer (5, 6) angeordnet sind und sich die Enden (21, 22) der Drehwelle (1) die über die Endlager (29) hinaus erstrecken, wobei die Einspeisemittel (32) an den über die Endlager hinausragenden Wellenabschnitten angreifen.

7. Drehkondensator gemäss einem der Ansprüche 1 bis 6, dadurch gekennzeichnet, dass die Einspeisemittel (32) als Federkontakte (37) mit vorzugsweise Mehrfachkontaktstellen ausgebildet sind.

8. Drehkondensator gemäss einem der Ansprüche 1 bis 7, dadurch gekennzeichnet, dass das Gehäuse (4, 5, 6) einen zylindrischen Mantel (4) aus Metall aufweist, welcher auf der gesamten Länge des Gehäuses ein koaxialer Abschirmung gewährleistet.

9. Drehkondensator gemäss einem der Ansprüche 7 oder 8, dadurch gekennzeichnet, dass die Federkontakte im wesentlichen aus einer zylindrischen Metallhülse (36) mit nach innen hervorstehenden Lamellen (37) sind.

10. Verwendung des Drehkondensators gemäss einem der Ansprüche 1 bis 9 als Abstimmelement in Schwingkreisen der HF-Technik in Beschichtungs- und Ätzanlagen der Halbleiterherstellung.
